(19) Europäisches Patentamt
European Patent Office
Office européen des brevets

(11) EP 2 513 011 B1

(12) FASCICULE DE BREVET EUROPEEN

(45) Date de publication et mention
de la délivrance du brevet:
**20.02.2019 Bulletin 2019/08**

(21) Numéro de dépôt: **10812913.1**

(22) Date de dépôt: **16.12.2010**

(51) Int Cl.:
*C04B 35/48* (2006.01)      *C04B 35/484* (2006.01)
*C03B 5/43* (2006.01)

(86) Numéro de dépôt international:
**PCT/IB2010/055887**

(87) Numéro de publication internationale:
**WO 2011/073945 (23.06.2011 Gazette 2011/25)**

(54) **PRODUIT RÉFRACTAIRE À FORTE TENEUR EN ZIRCONE**

FEUERFESTMATERIAL MIT EINEM HOHEN ZIRKONOXIDGEHALT

REFRACTORY PRODUCT HAVING HIGH ZIRCONIA CONTENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2009 FR 0959037**

(43) Date de publication de la demande:
**24.10.2012 Bulletin 2012/43**

(73) Titulaire: **Saint-Gobain Centre De Recherches
Et D'etudes Europeen
92400 Courbevoie (FR)**

(72) Inventeurs:
 • **GAUBIL, Michel
F-30133 Les Angles (FR)**
 • **MASSARD, Ludovic
F-84170 Monteux (FR)**
 • **CABODI, Isabelle
F-84300 Cavaillon (FR)**

(74) Mandataire: **Nony
11 rue Saint-Georges
75009 Paris (FR)**

(56) Documents cités:
WO-A1-03/074445      WO-A1-2005/068393
FR-A1- 2 723 583      FR-A1- 2 897 861
FR-A1- 2 913 013      FR-A1- 2 920 152
RU-C1- 2 039 026

**Description**

**Domaine technique**

L'invention concerne un nouveau produit réfractaire fondu et coulé à forte teneur en zircone.

**Etat de la technique**

Parmi les produits réfractaires, on distingue les produits fondus et coulés, bien connus pour la construction des fours de fusion du verre, et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas *a priori* utilisable telle quelle pour fabriquer un produit fondu et coulé, et réciproquement.

Les produits fondus et coulés, souvent appelés électrofondus, sont obtenus par fusion d'un mélange de matières premières appropriées dans un four à arc électrique ou par toute autre technique adaptée à ces produits. La matière en fusion est ensuite coulée dans un moule puis le produit obtenu subit un cycle de refroidissement contrôlé pour être amené à température ambiante sans fracturation. Cette opération est appelée « recuisson » par l'homme de l'art.

Parmi les produits fondus et coulés, les produits électrofondus à forte teneur en zircone sont réputés pour leur qualité de très grande résistance à la corrosion sans coloration du verre produit et sans génération de défauts.

Classiquement, les produits fondus et coulés à forte teneur en zircone comportent également de l'oxyde de sodium ($Na_2O$) pour éviter la formation de zircon à partir de la zircone et de la silice présentes dans le produit. La formation de zircon est en effet néfaste puisqu'elle s'accompagne d'une diminution de volume de l'ordre de 20%, créant ainsi des contraintes mécaniques à l'origine de fissures.

FR 2 701 022 décrit des produits fondus et coulés à forte teneur en zircone qui contiennent 7,0 à 11,2% en poids de $SiO_2$, 0,05 à 1,0% en poids de $P_2O_5$, 0,05 à 1,0% en poids d'oxyde de bore $B_2O_3$ et 0,01 à 0,12% en poids de $Na_2O + K_2O$.

FR 2 920 152 A1 décrit un produit réfractaire fondu et coulé à forte teneur en zircone comportant, en pourcentages massiques sur la base des oxydes et pour un total de plus de 98,5 %, plus de 85 % de $ZrO_2 + HfO_2$, plus de 10 % et au plus 12 % de $SiO_2$, entre 0,1 % et 2,4 % de $Al_2O_3$, moins de 1,5 % de $B_2O_3$, et un dopant choisi dans le groupe formé par $V_2O_5$, $CrO_3$, $Nb_2O_5$, $MoO_3$, $Ta_2O_5$, $WO_3$, et leurs mélanges, en une quantité pondérée telle que $0,2 \% \leq 2,43$. $V_2O_5+4,42.CrO_3+1,66.Nb_2O_5+3,07.MoO_3+Ta_2O_5+1,91.WO_3$.

FR 2 897 861 A1 décrit un produit réfractaire fondu et coulé à forte teneur en zircone comportant, en pourcentages massiques sur la base des oxydes et pour un total de plus de 98,5 %, plus de 85 % de $ZrO_2 + HfO_2$, entre 2 % et 10 % de $SiO_2$, entre 0,1 % et 2,4 % de $Al_2O_3$, moins de 1 % de $B_2O_3$, et un dopant choisi dans le groupe formé par $V_2O_5$, $CrO_3$, $Nb_2O_5$, $MoO_3$, $Ta_2O_5$, $WO_3$, et leurs mélanges, en une quantité pondérée telle que $0,2 \% \leq 2,43$. $V_2O_5+8,84.CrO_3+1,66.Nb_2O_5+6,14.MoO_3+Ta_2O_5+3,81.WO_3$.

WO 2005/068393 A1 décrit un produit réfractaire fondu et coulé comportant entre 0,8 % et 2,5% de $Al_2O_3$, entre 4,0 % et 10,0 % de $SiO_2$, entre 86 % et 95 % de $ZrO_2$, entre 0,1 % et 1,2 % de $B_2O_3$, jusqu'à 0,04 % de $Na_2O$, jusqu'à 0,4 % de CaO, jusqu'à 0,1 % de $Fe_2O_3$ et jusqu'à 0,25 % de $TiO_2$.

FR 2 723 583 décrit des produits fondus et coulés à forte teneur en zircone qui contiennent 3 à 8% en poids de $SiO_2$, 0,1 à 2,0% en poids d'$Al_2O_3$, 0,05 à 3,0% en poids d'oxyde de bore $B_2O_3$, 0,05 à 3% en poids de BaO + SrO + MgO, et 0,05 à 0,6% en poids de $Na_2O + K_2O$ et moins de 0,3% en poids de $Fe_2O_3 + TiO_2$.

FR 2 836 682 décrit des produits fondus et coulés à forte teneur en zircone qui contiennent 2 à 8% en poids de $SiO_2$, 0,2 à 2,0% en poids d'$Al_2O_3$, 0,12 à 1,0% en poids de $Na_2O$ et 0,5 à 2,6% en poids de $Y_2O_3 + CaO$.

Le produit ER-1195 produit et commercialisé par la Société Européenne des Produits Réfractaires et couvert par le brevet EP-B-403 387 est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en poids de $P_2O_5$. Elle est typique des produits à forte teneur en zircone utilisés pour les fours verriers.

Ces produits sont performants mais il existe un besoin permanent pour un produit fondu à forte teneur en zircone présentant une bonne faisabilité et une longévité élevée, notamment lorsqu'il est utilisé dans une cuve de four de verrerie.

La présente invention vise à satisfaire ce besoin.

**Résumé de l'invention**

L'invention propose un produit réfractaire fondu et coulé selon la revendication 1.

La teneur en $Y_2O_3$ peut être supérieure ou égale à 0,7%.

Un bloc d'une cuve d'un four de verrerie est soumis en service à une température qui diminue depuis sa face au contact du verre en fusion (« face chaude ») jusqu'à sa face exposée à l'extérieur de la cuve (« face froide »). Or un produit à forte teneur en zircone présente classiquement une température de dilatation maximale comprise entre les températures de ces deux faces. Deux blocs adjacents sont donc assemblés de manière à toujours rester en contact au moins au niveau de la région où ils sont soumis à cette température de dilatation maximale. On s'assure ainsi qu'au moins au niveau de cette région critique ils pourront assurer une étanchéité de la cuve. Il est important de limiter la corrosion dans cette région critique.

Or la corrosion par le verre en fusion augmente généralement avec sa température. Les inventeurs ont donc imaginé qu'il pouvait être avantageux de chercher à réduire la température de dilatation maximale du matériau des blocs afin de déplacer ladite région critique vers la face froide des blocs. Ainsi cette région critique peut-elle être en contact avec du verre en fusion plus visqueux et moins corrosif que suivant l'état de la technique antérieur.

Comme on le verra plus en détail dans la suite de la description, grâce à leurs recherches, les inventeurs ont découvert qu'un produit de la présente invention présente un comportement dilatométrique remarquable, et en particulier une température de dilatation maximale réduite. En outre, ce produit conserve une faisabilité industrielle élevée.

Dans un mode de réalisation, un produit selon l'invention comporte moins de 0,5%, moins de 0,3% de CaO. Dans un mode de réalisation, un produit selon l'invention comporte moins de 0,1% de chacun des oxydes $CeO_2$, CaO et MgO, voire ne comporte aucun de ces oxydes.

Lesdits oxydes peuvent n'être présents qu'à titre d'impuretés. Les inventeurs ont en effet observé que $Y_2O_3$ conduit aux meilleurs résultats.

Un produit selon l'invention peut encore comporter une ou plusieurs des caractéristiques optionnelles suivantes, y compris lorsqu'il est conforme aux modes de réalisation particuliers décrits ci-après et que ces caractéristiques optionnelles ne sont pas incompatibles avec lesdits modes de réalisation particuliers :

- De préférence $B_2O_3 \geq 0,095$ x ($Y_2O_3$ + 1/3 ($CeO_2$ +CaO + MgO)) x $SiO_2$ ;
- De préférence $B_2O_3 \geq 0,1$ x ($Y_2O_3$ + 1/3 ($CeO_2$ +CaO + MgO)) x $SiO_2$ ;
- La teneur massique en $ZrO_2$ + $HfO_2$ est inférieure à 97,0%, voire inférieure à 96,5% et/ou supérieure à 85,0%, ou supérieure à 86,0% ;
- La teneur massique en silice $SiO_2$ est supérieure à 2,5%, voire supérieure à 3,0% et/ou inférieure à 9,0%, voire inférieure à 8,0%, voire inférieure à 7,0%, voire inférieure à 6,0% ;
- La teneur massique en MgO est supérieure à 0,1 % ;
- La teneur massique en $CeO_2$ est supérieure à 0,1 % ;
- La teneur massique en CaO est inférieure à 0,7 %, inférieure à 0,5 %, inférieure à 0,3 % et/ou supérieure à 0,1 % ;
- La teneur massique en chacun des oxydes MgO, $CeO_2$ et CaO est inférieure à 0,2 % ;
- La teneur massique en $Y_2O_3$ + $CeO_2$ +CaO + MgO est supérieure à 0,9%, et/ou inférieure à 3,5%, voire inférieure à 3,0% ;
- La teneur massique en $Y_2O_3$ est supérieure à 0,5%, voire supérieure à 0,6%, voire supérieure à 0,7%, voire supérieure à 0,8%, voire supérieure à 0,85 %, voire supérieure à 0,9%, et/ou inférieure à 3,0%, voire inférieure à 2,5%, voire inférieure à 2,0%, voire inférieure à 1,5%, voire inférieure à 1,3% ;
- La teneur massique en oxyde de bore $B_2O_3$ est supérieure à 0,2%, voire supérieure à 0,3%, voire supérieure à 0,4% et/ou inférieure à 3,5%, inférieure à 3%, inférieure à 2,5%, voire inférieure à 2,0%, voire inférieure à 1,5%, voire inférieure à 1,0% ;
- La teneur massique en alumine $Al_2O_3$ est inférieure à 1,5%, voire inférieure à 1,2%, ou inférieure à 1,0% ;
- La teneur massique en alumine $Al_2O_3$ est supérieure à 0,4%, supérieure à 0,6%, voire supérieure à 0,7% ;
- La somme des teneurs massiques en oxyde de sodium $Na_2O$ et en oxyde de potassium $K_2O$ est inférieure à 0,4%, voire inférieure à 0,3%, inférieure à 0,2% ;
- L'oxyde de sodium $Na_2O$ n'est présent qu'à titre d'impuretés et sa teneur massique est inférieure à 0,2%, voire inférieure à 0,1% ;
- L'oxyde de potassium $K_2O$ n'est présent qu'à titre d'impuretés et sa teneur massique est inférieure à 0,2%, voire inférieure à 0,1% ;
- La teneur massique en oxydes de fer et/ou de titane, $Fe_2O_3$ + $TiO_2$, est inférieure à 0,4%, de préférence inférieure à 0,3%, de préférence inférieure à 0,2% ;
- La teneur massique en BaO est inférieure à 0,1%, voire inférieure à 0,05% ;
- La teneur massique totale des « autres espèces » est inférieure à 0,6%, inférieure à 0,5%, voire inférieure à 0,3% ;
- Les « autres espèces » ne sont constituées que par des impuretés ;
- La teneur massique d'une « autre espèce » quelconque est inférieure à 0,4%, voire inférieure à 0,3%, voire inférieure à 0,2% ;
- Les oxydes représentent plus de 98%, plus de 99%, voire sensiblement 100% de la masse du produit.

Suivant un mode de réalisation particulier, l'invention propose un produit réfractaire fondu et coulé comprenant, en pourcentages massiques sur la base des oxydes:

- $SiO_2$ :     < 8%
- $Y_2O_3$ :     < 2,5%
- $B_2O_3$ :     0,3% à 2,5%
- $Al_2O_3$ :     < 1,5%.

Suivant un mode de réalisation particulier, l'invention propose un produit réfractaire fondu et coulé comprenant, en pourcentages massiques sur la base des oxydes:

- $SiO_2$ :     3% à 6%
- $Y_2O_3$:     < 1,5%
- $B_2O_3$:     0,4% à 1,0%
- $Al_2O_3$ :     < 1,2%.

L'invention concerne également un procédé de fabrication d'un produit réfractaire selon l'invention, comprenant les étapes successives suivantes :

a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,

ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire ou des précurseurs de ces oxydes. De préférence, on tient compte des teneurs de ces oxydes dans les sources des autres oxydes où ils sont classiquement considérés comme des impuretés.

De préférence, le refroidissement est contrôlé, de préférence de manière à être effectué à une vitesse inférieure à 20°C par heure, de préférence à la vitesse d'environ 10°C par heure.

L'invention concerne aussi un four de fusion de verre comportant un produit réfractaire selon l'invention, ou un produit réfractaire fabriqué ou susceptible d'être fabriqué suivant un procédé selon l'invention, en particulier dans les régions destinées à être en contact avec le verre en fusion. Dans un four selon l'invention, le produit réfractaire peut avantageusement faire partie d'une cuve de préparation de verre par fusion, notamment par fusion électrique, où il est susceptible d'entrer en contact avec du verre en fusion à une température supérieure à 1200°C.

L'invention concerne également un procédé pour limiter la corrosion dans une région dans laquelle deux blocs d'une cuve d'un four de verrerie ne sont en contact que lorsque la cuve contient du verre en fusion. Suivant l'invention, on utilise des blocs en un produit selon l'invention.

**Définitions**

Les pourcentages massiques en oxydes se rapportent aux teneurs globales pour chacun des éléments chimiques correspondants, exprimées sous la forme de l'oxyde le plus stable, selon la convention habituelle de l'industrie.

"$Y_2O_3$+ $CeO_2$ +CaO + MgO " signifie classiquement $Y_2O_3$ et/ou $CeO_2$ et/ou CaO et/ou MgO.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, et chrome sont des impuretés.

Toutes les quantités d'oxydes dans les produits décrits et revendiqués sont des pourcentages massiques sur la base des oxydes.

**Description détaillée de l'invention**

Dans les produits fondus et coulés selon l'invention, la forte teneur en zircone $ZrO_2$ permet de répondre aux exigences de haute résistance à la corrosion sans coloration du verre produit ni génération de défauts nuisibles à la qualité de ce verre.

L'oxyde d'hafnium, $HfO_2$, présent dans le produit selon l'invention est l'oxyde d'hafnium naturellement présent dans les sources de zircone. Sa teneur dans un produit selon l'invention est donc inférieure à 5%, généralement inférieure à 2%.

La présence de silice $SiO_2$ permet notamment la formation d'une phase vitreuse intergranulaire apte à accommoder de manière efficace les variations de volume de la zircone lors de sa transformation allotropique réversible, c'est-à-dire lors du passage de la phase monoclinique à la phase tétragonale. La teneur massique en silice doit être supérieure à 2%. En revanche, l'ajout de silice ne doit pas dépasser 10% car cet ajout se fait au détriment de la teneur en zircone et peut donc nuire à la résistance à la corrosion.

La présence de $B_2O_3$ permet notamment d'améliorer la faisabilité des produits. En revanche, l'ajout d'oxyde de bore ne doit pas dépasser 4,5% car cet ajout se fait au détriment de la teneur en zircone et peut donc nuire à la résistance à la corrosion.

La présence d'alumine $Al_2O_3$ est notamment nécessaire à la formation d'une phase vitreuse stable et à la bonne coulabilité de la matière en fusion dans le moule. Toutefois, l'ajout d'alumine ne doit pas dépasser 2% car une teneur massique plus élevée peut entraîner une instabilité de la phase vitreuse (formation de cristaux de mullite), en particulier du fait de la présence d'oxyde de bore.

La teneur massique de $Na_2O+K_2O$ ne doit pas dépasser 0,50% afin de limiter les envolements de matières premières, en particulier de l'oxyde de bore. Dans un produit selon l'invention, on considère que les oxydes $Na_2O$ et $K_2O$ ont des effets similaires.

Selon l'invention, la teneur massique de $Fe_2O_3 + TiO_2$ est inférieure à 0,55% et celle de $P_2O_5$ est inférieure à 0,05%. En effet, ces oxydes sont néfastes et leur teneur doit être limitée à des traces introduites à titre d'impuretés avec les matières premières.

Les « autres espèces » sont les espèces qui ne sont pas listées ci-dessus, à savoir les espèces autres que $ZrO_2$, $Hf_2O$, $SiO_2$, $Y_2O_3$, $CeO_2$, $CaO$, $MgO$, $B_2O_3$, $Al_2O_3$, $Na_2O$, $K_2O$, $P_2O_5$, $TiO_2$, et $Fe_2O_3$. Dans un mode de réalisation, les « autres espèces » sont limitées à des espèces dont la présence n'est pas particulièrement souhaitée et qui sont généralement présentes à titre d'impuretés dans les matières premières.

Classiquement, les sources des oxydes listés ci-dessus ne comportent pas $Ta_2O_5$. La teneur en $Ta_2O_5$ d'un produit selon l'invention peut être inférieure à 0,9 %, voire inférieure à 0,5 %, ou inférieure à 0,2 %.

Dans un autre mode de réalisation, les « autres espèces » peuvent également comprendre des espèces dont la présence est avantageuse. Ainsi, dans un mode de réalisation, le produit comporte avantageusement au moins 0,05% d'oxyde de baryum $BaO$. Cet oxyde peut être une impureté ou être ajouté volontairement dans la charge de départ, si nécessaire. De préférence sa teneur est inférieure à 0,5%, en pourcentage massique sur la base des oxydes.

Un produit selon l'invention peut être classiquement fabriqué suivant les étapes a) à c) décrites ci-dessous ;

  a) mélange de matières premières de manière à former une charge de départ,
  b) fusion de ladite charge de départ jusqu'à obtention d'une matière en fusion,
  c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit en faisant barboter dans le bain un gaz oxydant (air ou oxygène, par exemple) ou encore en ajoutant au bain des substances dégageant de l'oxygène telles que des peroxydes ou des nitrates.

A l'étape c), le refroidissement est de préférence effectué à une vitesse inférieure à 20°C par heure, de préférence à la vitesse d'environ 10°C par heure.

Tout procédé conventionnel de fabrication de produits fondus à base de zircone destinés à des applications dans des fours de fusion de verre peut être mis en oeuvre, pourvu que la composition de la charge de départ permette d'obtenir des produits présentant une composition conforme à celle d'un produit selon l'invention.

**Exemples**

Les exemples non limitatifs suivants sont donnés dans le but d'illustrer l'invention.

Dans ces exemples, on a employé les matières premières suivantes :

- de la zircone contenant principalement, en moyenne massique, 98,5% de $ZrO_2$ + $HfO_2$, 0,2% de $SiO_2$ et 0,02% de $Na_2O$,
- du sable de zircon à 33% de silice,
- des oxydes d'yttrium et de bore de pureté supérieure à 99%,
- de l'alumine de type AC44 vendue par la société Pechiney et contenant en moyenne 99,4% d'alumine $Al_2O_3$.

Les produits ont été préparés selon le procédé classique de fusion en four à arc, puis coulés pour obtenir des blocs de format 220 mm x 450 mm x 150 mm.

L'analyse chimique des produits obtenus est donnée dans le tableau 1 ; il s'agit d'une analyse chimique moyenne, donnée en pourcentages massiques.

Faisabilité

Pour chacun de ces exemples, on évalue la faisabilité du produit grâce à un indice de faisabilité IF. Une valeur de IF égale à 1 correspond à une excellente faisabilité (rendement de fabrication optimal, pas de défauts sur les pièces obtenues), une valeur de IF égale à 0 correspond à une faisabilité inacceptable pour une fabrication industrielle (fissures traversantes, pièces morcelées...).

Sur les différents exemples de blocs réalisés, des échantillons ont été prélevés pour réaliser des tests.

Mesure de la température de dilatation maximale avant changement de phase

On établit la courbe de dilatation en fonction de la température et on relève la température correspondant à la dilatation maximale, avant la transformation (monoclinique vers quadratique) de la zircone, notée « T » dans le tableau 1.

L'exemple 1 correspond au produit ER1195 qui constitue la référence.

Tableau 1

| Ex. | $ZrO_2$ | $SiO_2$ | $Y_2O_3$ | $Al_2O_3$ | $Na_2O$ | $B_2O_3$ | 0,09 x $Y_2O_3$ x $SiO_2$ | IF | T |
|-----|---------|---------|----------|-----------|---------|----------|---------------------------|----|----|
| 1 | 95,1 | 3,45 | 0,00 | 1,15 | 0,30 | 0,00 | 0,00 | 1 | 1140°C |
| 2 | 95,1 | 3,14 | 0,72 | 0,65 | 0,00 | 0,39 | 0,20 | 1 | 1083°C |
| 3 | 93,5 | 4,20 | 0,83 | 0,96 | 0,00 | 0,51 | 0,31 | 1 | 1032°C |
| 4 | 92,9 | 5,00 | 0,85 | 0,93 | 0,04 | 0,28 | 0,38 | 0 | 1034°C |
| 5 | 90,9 | 6,26 | 0,86 | 1,16 | 0,00 | 0,84 | 0,48 | 1 | 1040°C |
| 6 | 92,7 | 4,87 | 0,88 | 0,90 | 0,04 | 0,66 | 0,39 | 1 | 1029°C |
| 7 | 95,1 | 2,59 | 0,97 | 1,03 | 0,05 | 0,28 | 0,23 | 1 | 1011°C |
| 8 | 94,6 | 3,06 | 1,20 | 0,77 | 0,05 | 0,37 | 0,33 | 1 | 983°C |
| 9 | 92,3 | 5,00 | 1,20 | 0,90 | 0,00 | 0,60 | 0,54 | 1 | 980°C |
| 10 | 93,9 | 3,81 | 1,23 | 0,79 | 0,00 | 0,25 | 0,42 | 0 | 957°C |

Les résultats montrent le rôle positif de l'oxyde d'yttrium: On considère qu'une teneur minimale de 0,8% d'oxyde d'yttrium dans le produit est nécessaire pour baisser significativement la température de dilatation maximale avant changement de phase, en particulier pour que cette température soit inférieure à 1050°C. Ainsi, il devient avantageusement possible de réduire la température du verre en fusion en contact avec la région critique, d'augmenter ainsi sa viscosité et donc la corrosion qu'elle engendre. Avantageusement, les risques de fuites de verre sont donc limités.

Une comparaison des exemples 3 et 4 ou 9 et 10 montre l'importance de la présence d'une quantité minimale d'oxyde de bore pour obtenir une faisabilité optimale en présence d'oxyde d'yttrium. Une comparaison des exemples 4 et 7 montre cependant que cette quantité minimale dépend des teneurs en oxyde d'yttrium et en silice.

Par ailleurs, d'autres essais ont permis de vérifier que les produits selon l'invention présentent également les autres propriétés reconnues pour les matériaux à forte teneur en zircone, en particulier la résistance à la corrosion par le verre en fusion.

Bien entendu, la présente invention n'est pas limitée aux modes de réalisation décrits et représentés fournis à titre d'exemples illustratifs et non limitatifs.

**Revendications**

1. Produit réfractaire fondu et coulé comportant, en pourcentages massiques sur la base des oxydes et pour un total de 100% :

- $ZrO_2$ : complément à 100%
- $HfO_2$ : < 5%
- $SiO_2$ : 2% à 10%
- $0,9\% < Y_2O_3 + CeO_2 + CaO + MgO \leq 4,0\%$
- $CeO_2$ : < 0,3 %
- MgO : < 0,3 %
- $B_2O_3$ : $\leq 4,5\%$
- $B_2O_3$ : $\geq 0,09 \times (Y_2O_3 + 1/3\,(CeO_2 + CaO + MgO)) \times SiO_2$
- $Al_2O_3$ : 0,3% à 2,0%
- $Na_2O + K_2O$ : $\leq 0,5\%$
- $P_2O_5$ : < 0,05%
- $Fe_2O_3 + TiO_2$ : < 0,55%
- autres espèces : < 1,0%,

pourvu que la teneur en $Y_2O_3$ soit supérieure ou égale à 0,5% ou que la teneur en $CeO_2 + CaO + MgO$ soit supérieure ou égale à 2%.

2. Produit selon la revendication précédente, dans lequel

$$B_2O_3 \geq 0,095 \times (Y_2O_3 + 1/3\,(CeO_2 + CaO + MgO)) \times SiO_2$$

3. Produit selon la revendication précédente, dans lequel

$$B_2O_3 \geq 0,1 \times (Y_2O_3 + 1/3\,(CeO_2 + CaO + MgO)) \times SiO_2$$

4. Produit selon l'une quelconque des revendications précédentes, dans lequel la teneur en oxyde de bore est supérieure à 0,4%.

5. Produit selon l'une quelconque des revendications précédentes, dans lequel la teneur en oxyde de bore est inférieure à 2,5%.

6. Produit selon l'une quelconque des revendications précédentes, dans lequel la teneur en oxyde d'yttrium $Y_2O_3$ est supérieure ou égale à 0,7%.

7. Produit selon l'une quelconque des revendications précédentes, dans lequel la teneur en oxyde d'yttrium $Y_2O_3$ est inférieure à 2,5%.

8. Produit selon l'une quelconque des revendications précédentes, dans lequel la teneur en silice est inférieure à 8,0%.

9. Produit selon l'une quelconque des revendications précédentes, dans lequel la teneur en alumine est inférieure à 1,5%.

10. Produit selon l'une quelconque des revendications précédentes, dans lequel la teneur en alumine est supérieure à 0,7 %.

11. Produit selon l'une quelconque des revendications précédentes, dans lequel ($Na_2O+K_2O$) < 0,3%.

12. Produit selon l'une quelconque des revendications précédentes, dans lequel la teneur massique totale des « autres espèces » est inférieure à 0,5%.

13. Produit selon l'une quelconque des revendications précédentes, comportant moins de 0,5% de CaO.

14. Produit selon la revendication précédente, comportant moins de 0,3 % de CaO.

15. Four de fusion de verre comportant, dans une région destinée à être en contact avec le verre en fusion, un produit réfractaire selon l'une quelconque des revendications précédentes.

**Patentansprüche**

1. Ein geschmolzenes und gegossenes, hitzebeständiges Produkt, umfassend in Massenprozent auf der Basis der Oxide und bei einer Gesamtsumme von 100%:

| | |
|---|---|
| - $ZrO_2$: | restliche Ergänzung bis auf 100% |
| - $HfO_2$: | < 5% |
| - $SiO_2$: | 2% bis 10% |
| - 0,9 % < $Y_2O_3$ + $CeO_2$ + CaO + MgO $\leq$ 4,0% | |
| - $CeO_2$: | < 0,3% |
| - MgO: | < 0,3% |
| - $B_2O_3$: | $\leq$ 4,5% |
| - $B_2O_3$: | $\geq$ 0,09 x ($Y_2O_3$ + 1/3 ($CeO_2$ + CaO + MgO)) x $SiO_2$ |
| - $Al_2O_3$: | 0,3% bis 2,0% |
| - $Na_2O$ + $K_2O$: | $\leq$ 0,5% |
| - $P_2O_5$: | < 0,05% |
| - $Fe_2O_3$ + $TiO_2$: | < 0,55% |
| - andere Spezies; | < 1,0% |

vorausgesetzt, dass der Gehalt an $Y_2O_3$ größer oder gleich 0,5% ist, oder dass der Gehalt an $CeO_2$ + CaO + MgO größer oder gleich 2% ist.

2. Das Produkt gemäß dem vorhergehenden Anspruch, wobei

$$B_2O_3 \geq 0,095 \text{ x } (Y_2O_3 + 1/3 (CeO_2 + CaO + MgO)) \times SiO_2$$

3. Das Produkt gemäß dem vorhergehenden Anspruch, wobei

$$B_2O_3 \geq 0,1 \text{ x } (Y_2O_3 + 1/3 (CeO_2 + CaO + MgO)) \times SiO_2$$

4. Das Produkt gemäß einem der vorhergehenden Ansprüche, wobei der Boroxidgehalt größer als 0,4% ist.

5. Das Produkt gemäß einem der vorhergehenden Ansprüche, wobei der Boroxidgehalt weniger als 2,5% beträgt.

6. Das Produkt gemäß einem der vorhergehenden Ansprüche, wobei der Yttriumoxidgehalt $Y_2O_3$ größer als oder gleich 0,7% ist.

**EP 2 513 011 B1**

**7.** Das Produkt gemäß einem der vorhergehenden Ansprüche, wobei der Yttriumoxidgehalt $Y_2O_3$ weniger als 2,5% beträgt.

**8.** Das Produkt gemäß einem der vorhergehenden Ansprüche, wobei der Siliciumdioxidgehalt weniger als 8,0% beträgt.

**9.** Das Produkt gemäß einem der vorhergehenden Ansprüche, wobei der Aluminiumoxidgehalt weniger als 1,5% beträgt.

**10.** Das Produkt gemäß einem der vorhergehenden Ansprüche, wobei der Aluminiumoxidgehalt größer als 0,7% ist.

**11.** Das Produkt gemäß einem der vorhergehenden Ansprüche, wobei ($Na_2O+K_2O$) < 0,3% ist.

**12.** Das Produkt gemäß einem der vorhergehenden Ansprüche, wobei der Gesamtmassengehalt der "anderen Spezies" weniger als 0,5% beträgt.

**13.** Das Produkt gemäß einem der vorhergehenden Ansprüche, welches weniger als 0,5% an CaO umfasst.

**14.** Das Produkt gemäß dem vorhergehenden Anspruch, welches weniger als 0,3% an CaO umfasst.

**15.** Ein Glasschmelzofen, umfassend in einem Bereich, der dazu bestimmt ist, mit dem geschmolzenen Glas in Kontakt zu kommen, ein hitzebeständiges Produkt nach einem der vorhergehenden Ansprüche.

**Claims**

**1.** A fused cast refractory product comprising, in percentages by weight on the basis of the oxides and for a total of 100%:

- $ZrO_2$: balance to 100%
- $Hf_2O$: < 5%
- $SiO_2$: 2% to 10%
- 0.9 % < $Y_2O_3$ + $CeO_2$ + CaO + MgO ≤ 4.0 %
- $CeO_2$: < 0.3%
- MgO: < 0.3%
- $B_2O_3$: ≤ 4.5%
- $B_2O_3$: ≥ 0.09 × ($Y_2O_3$ + 1/3 ($CeO_2$ + CaO + MgO)) × $SiO_2$
- $Al_2O_3$: 0.3% to 2.0%
- $Na_2O$ + $K_2O$: ≤ 0.5%
- $P_2O_5$: < 0.05%
- $Fe_2O_3$ + $TiO_2$: < 0.55%
- other species: < 1.0%;

providing the content of $Y_2O_3$ is greater than or equal to 0.5% or the content of $CeO_2$ + CaO + MgO is greater than or equal to 2%.

**2.** A product according to the preceding claim, wherein:

$$B_2O_3 \geq 0.095 \times (Y_2O_3 + 1/3 (CeO_2 + CaO + MgO)) \times SiO_2$$

**3.** A product according to the preceding claim, wherein:

$$B_2O_3 \geq 0.1 \times (Y_2O_3 + 1/3 (CeO_2 + CaO + MgO)) \times SiO_2$$

**4.** A product according to any preceding claim, wherein the boron oxide content is greater than 0.4%.

9

**5.** A product according to any preceding claim, wherein the boron oxide content is less than 2.5%.

**6.** A product according to any preceding claim, wherein the yttrium oxide $Y_2O_3$ content is greater than or equal to 0.7%.

**7.** A product according to any preceding claim, wherein the yttrium oxide $Y_2O_3$ content is less than or equal to 2.5%.

**8.** A product according to any preceding claim, wherein the silica content is less than 8.0%.

**9.** A product according to any preceding claim, wherein the alumina content is less than 1.5%.

**10.** A product according to any preceding claim, wherein the alumina content is greater than 0.7%.

**11.** A product according to any preceding claim, wherein $(Na_2O + K_2O) < 0.3\%$.

**12.** A product according to any preceding claim, wherein the total content by weight of "other species" is less than 0.5%.

**13.** A product according to any preceding claim, including less than 0.5% of CaO.

**14.** A product according to the preceding claim, comprising less than 0.3 % of CaO.

**15.** A glass melting furnace including, in a region intended to come into contact with molten glass, a refractory product according to any preceding claim.

EP 2 513 011 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2701022
- FR 2920152 A1
- FR 2897861 A1
- WO 2005068393 A1
- FR 2723583
- FR 2836682
- EP 403387 B
- FR 1208577
- FR 75893
- FR 82310